# EUROPEAN PATENT APPLICATION

(11) **EP 2 657 740 A1**
(43) Date of publication of application: **30.10.2013**
(21) Application number: 12250100.0
(22) Date of filing: 23.04.2012
(51) Int. Cl.: G02B 6/44, H01B 1/04

(54) **Cable**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

The present invention discloses a new and inventive cable structure which comprises: a bore (120) for receiving a blown fibre cable or bundle; one or more carbon nano tube wires (130, 132) for transmitting data signals; and/or one or more carbon nano tube wires (130, 132) for transmitting an electrical power supply.

## Description

The present invention relates to a cable and in particular to a drop cable for use in connecting domestic or commercial premises to a communications networks.

Asymmetric digital subscriber line (ADSL) systems enable data to be transmitted over a pair of metallic twisted pair (usually copper) wires to customer premises. It is thought that the realistic maximum transmission performance that is likely to be obtained with modern variants of ADSL is a download data rate of 24 Mbps and an upload speed of about 3 Mbps at the expected nominal distance of a customer premises from an exchange in a telecommunications network. Such data rates are dependent on the length of the metallic twisted pair from the customer premises to the telephone exchange and thus many customers will receive services at significantly lower data rates.

To improve data rates optical fibre has been installed into the access network. The greatest data rates are likely to be provided using fibre to the premises (FTTP) networks, such as passive optical networks (PONs) but there is a significant cost involved in providing fibre directly to customer premises. Fibre to the cabinet (FTTCab) and Fibre to the Distribution Point (FTTDP) networks are known to provide an attractive solution to providing customers with high data rate services without requiring as much investment as FTTP networks. Typically in FTTCab networks, very high bit-rate digital subscriber line (VDSL) systems are used to provide download data rates of 40 Mbps and higher over the metallic twisted pair cables. It is believed that improvements to VDSL systems may provide download data rates in excess of 100 Mbps. FTTP networks can provide almost unlimited bandwidth to customers and it is likely that commercial considerations rather than technical issues that will limit that data rates that will be supplied to customers. One particular problem is the cost of installing optical fibre into customer premises. One approach is to install a hollow tube from a network node to the customer premises and to then install a bundle of optical fibre into the tube using a source of compressed air and by pushing the bundle of fibres.

Such blown fibre (sometimes referred to as blown cable) techniques were first described in EP-B-108 590. An example of the type of tubing used for blown fibre installation is described in EP-B- 432 171; EP-B-521 710 discloses a cable structure suitable for a blown fibre installation and EP-B-1 015 928 discloses a cable blowing apparatus.

According to a first aspect of the present invention there is provided a cable for use in a communications network, the cable comprising one or more bores for receiving a further cable and one or more carbon nano tube (CNT) wires: The cable preferably comprises one or more pairs of CNT wires configured to conduct an electrical signal. The electrical signal may comprise a data signal or a power signal. Furthermore, the cable may comprise one or more CNT wires configured to act as a reinforcing element. The cable may comprise two bores for receiving a further cable

Such a cable may provide significant operational advantages to a network operator. A dropcable according to the present invention will support all of the different network architectures discussed above. It can be used to provide conventional PSTN/DSL services using the CNT wires to carry electrical telephony and data signals. If a customer elects to upgrade to FTTC-based services then the data can still be sent over a pair of CNT wires. A further pair of CNT wires can be used to back-power FTTC equipment from the customer premises. If a customer decides to receive services delivered over FTTP then as the blowing tube is already present then the upgrade can be provided more readily as there is no need to install a dropcable comprising a blowing tube. Furthermore, if a customer decides to move back to conventional PSTN/DSL services then this can be achieved without needing to modify the network infrastructure further.

Embodiments of the present invention will now be described, by way of example only, with reference to the accompanying drawings in which:
Figure 1 shows a schematic depiction of a cable according to a first embodiment of the present invention;
Figures 2 to 4 show a schematic depiction of a variant of the cable shown in Figure 1;
Figure 5 shows a schematic depiction of a cable according to a second embodiment of the present invention; and
Figure 6 shows a schematic depiction of a variant of the cable shown in Figure 5.

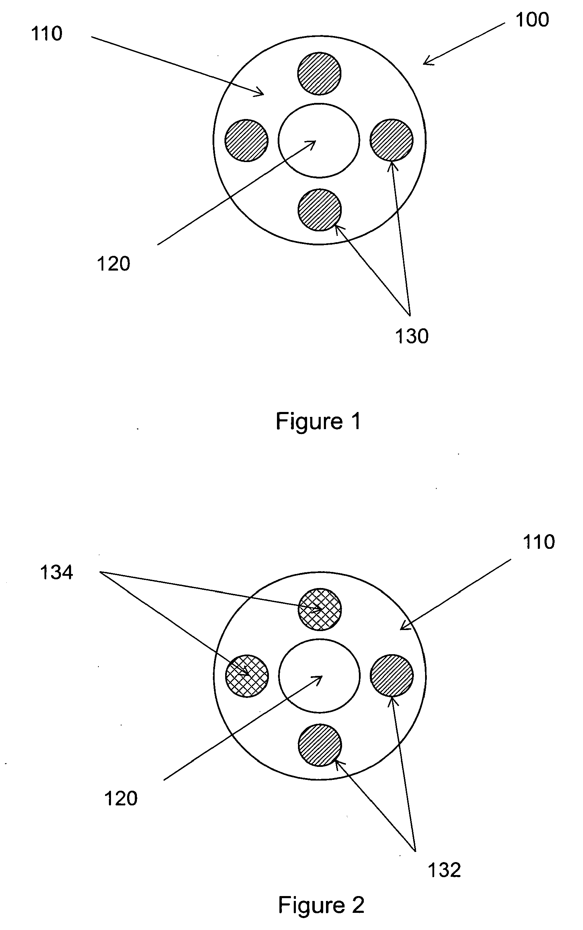

Figure 1 shows a schematic depiction of a cable 100 according to a first embodiment of the present invention. The cable 100 comprises a body region 110 which has an annular shape such that it defines a central bore 120. Contained within the body region 110 are a plurality of carbon nanotube (CNT) wires. Figure 1 shows that the cable comprises 4 CNT wires which are preferably arranged in 2 pairs of CNT wires. It should be understood that the cable might comprise a greater number of CNT wires. Carbon nanotubes are an allotrope of carbon and they have a substantially cylindrical form. It is known to form wires from CNTs to take advantage of the electrical characteristics of CNTs such that electrical currents can be passed down the wires. See, for example, US 7,993,620, WO2004/043858 and Zhao et al "lodine doped carbon nanotube cables exceeding specific electrical conductivity of metals", Scientific Reports, |1:83| DOI: 10.1038/srep00083.

It has been demonstrated that carbon nanotubes can be fabricated in large quantities and with specific diameters and chirality that means that they have the properties of metallic conductors. It is thought that significant advantages in electrical and physical characteristics can be realised for wires manufactured from such CNTs. For example, it is theoretically predicted that such CNT wires will have lower resistivity than copper or silver conductors and that they will not be subject to the skin effect that is present in copper conductors, which leads to a decreased performance as the frequency of an AC current passed through them increases. In addition it has been demonstrated that CNTs can be used for data transmission. Physically, CNT wires have been demonstrated to be highly flexible and extremely strong and therefore suited to fabrication into very fine but robust structures.

The cable 100 can be used as a drop cable which can be used in a FTTP network, a FTTC network or a conventional PSTN network. If the network is a conventional PSTN network or a FTTC network then one (or more) of the pairs of CNT wires can be used to carry the electrical signals that are sent from the network to the customer premises (and also from the customer premises back to the communications network). If the network is a FTTP network then an optical fibre bundle can be blown through the bore 120 to provide the connection from the network to the customer premises.

Regardless of the type of network that the cable is connected to, one or more of the pairs of CNT wires may be used to provide an electrical power signal. This may be used to provide power from the customer premises to a network node such that optoelectronic equipment in the network can be powered. Alternatively, power may be supplied from a network node to power the customer premises equipment. Conventional telephone handsets can be powered by electrical signals sent over the PSTN so that even if electrical power is lost at the customer premises then it is still possible to provide telephony services. Providing back-up power for FTTP networks is conventionally implemented by installing batteries within the customer premises. The different CNT wires within the cable will be coloured according to a predetermined colour scheme such that they can be identified by an engineer. If required, the CNT wires may be coated with one or more outer layers that provides mechanical protection and/or electrical insulation. The colour identification scheme may be applied to, or incorporated as a part of, the outer layer(s). The CNT wires may be formed in the cable such that they are parallel to blowing bores but it is preferred that the CNT wires are stranded around the blowing bores. The stranding of the CNT wires provides a degree of strain relief when the cable experiences a longitudinally strain.

By controlling the chirality of the CNTs it is possible to determine the characteristics of the CNT wires that are thereby formed. Figure 2 shows a variation of the cable 100 described above with respect to Figure 1 in which the cable comprises one pair of CNT wires 132 which have been configured to have improved electrical characteristics and one pair of CNT wires which have been configured to have improved mechanical characteristics. An additional colour scheme or identifier may be provided such that the CNT wires configured to have improved electrical characteristics can be distinguished from the CNT wires configured to have improved mechanical characteristics. It will be understood that the cable shown in Figure 2 may comprise a greater number of CNT wires (or pairs of CNT wires) than those shown.

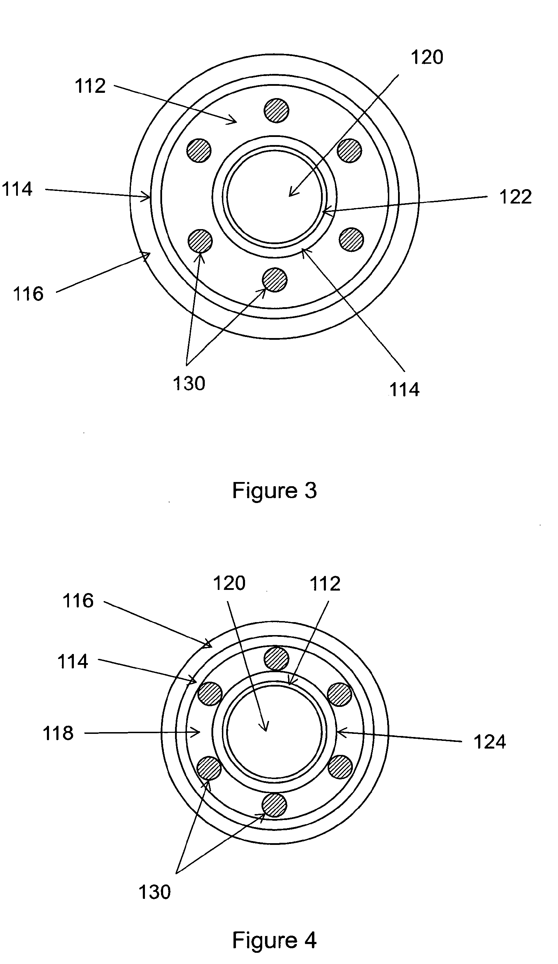

Figure 3 shows a further variation of the cable 100 described above with respect to Figure 1. The blowing bore 120 is defined by an inner layer 122 which is received upon an outer layer 124. The inner layer 122 preferably comprises materials which give a low friction during the blown installation of a cable or fibre bundle. Arranged around the outer layer 124 is the cable body 112, within which is received a plurality of CNT wires 130. The cable body is surrounded by a tape or layer 114, which protects the cable body from water ingress into the cable. An external jacket 116 is located around the layer 114 to protect the cable from abrasion and/or mechanical damage.

Figure 4 shows a yet further variation of the cable 100 described above with respect to Figure 1. In a similar manner to the cable variant described above with reference to Figure 3, the blowing bore 120 is defined by an inner layer 122 which is received upon an outer layer 124. The CNT wires 130 are arranged around the outer layer 124 and are held in place by water barrier layer 114. The interstices between the CNT wires are preferably filled to prevent longitudinal water protection, for example using a thixotropic gel. The water barrier layer 114 is covered with an external jacket 116.

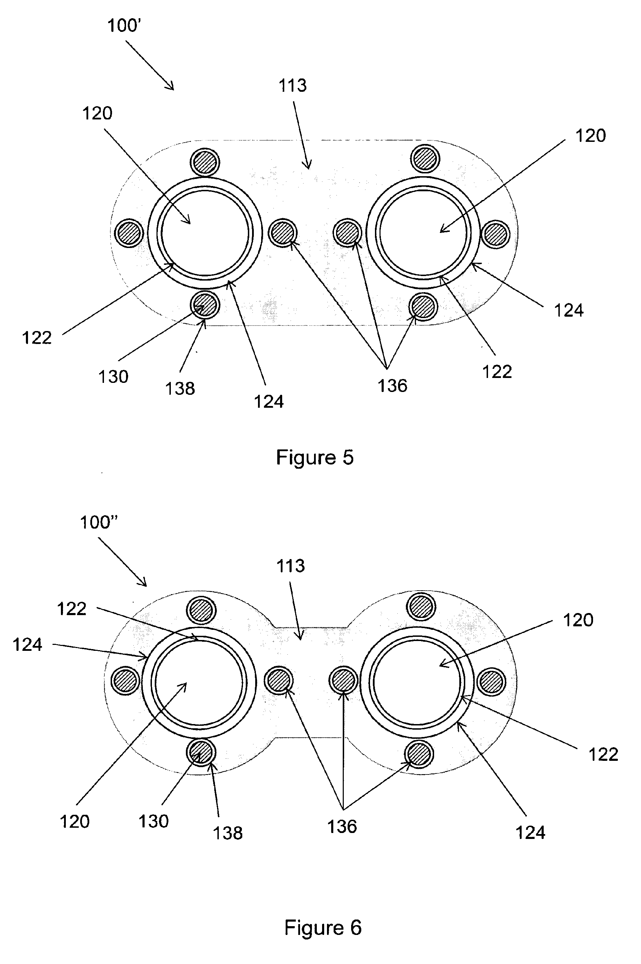

Figure 5 shows a schematic depiction of a cable 100' according to a second embodiment of the present invention in which the cable comprises two bores 120 into which a cable or fibre bundle may be blown. Each of the bores 120 is defined by an inner layer 122 which is received upon an outer layer 124. Again, the inner layer 122 preferably comprises materials which give a low friction during the blown installation of a cable or fibre bundle. The cable 100' has a cross-section which is substantially lozenge-shaped. In addition to the two bores the cable 100' comprises a plurality of insulated CNT wires 136. These CNT wires comprise external insulation 138 applied around the exterior of the CNT wires 130. A first sub-set of the plurality of insulated CNT wires 136 may be associated with a first blowing bore and a second sub-set of the plurality of insulated CNT wires 136 may be associated with the other blowing bore. Figure 6 shows a variation of the cable 100' described above with respect to Figure 5; cable 100" has a cross-section which is normally referred to as 'figure of eight', with two lobes being connected by a narrower central section. As before, the cable 100" comprises two blowing bores 120 and a plurality of insulated CNT wires 136, such that a first sub-set of the plurality of insulated CNT wires 136 may be associated with a first blowing bore and a second sub-set of the plurality of insulated CNT wires 136 may be associated with the other blowing bore.

It will be readily and immediately apparent to those skilled in the art of cable design and manufacture that a great number of variants of these cables may be produced without departing from the teaching of the present invention. It will be understood that additional cable elements and materials that are not described above or shown in Figures 1-6 may be added into a cable according to the present invention.

One of the limitations of a dropcable is that they are normally installed from telegraph poles to customer premises and thus are at risk of being struck by vehicles if the cables. For this reason, dropwires and dropcables are normally designed to break in the event of a vehicle strike to minimise the risk that the telegraph pole supporting the dropcable is damaged or broken. The person skilled in the art of cable design and manufacture will be aware of this design limitation and will be able to produce an appropriate dropcable design which complies with it.

Another known allotrope of carbon is graphene. It is known to spin graphene oxide flakes into fibres several metres in length (see Z Xu & C Gao, 'Graphene chiral liquid crystals and macroscopic assembled fibres' Nature Communications 2, 571 (2011)). These graphene fibres are electrically conductive and could be used in place of CNT wires in cables according to the present invention.

In summary, the present invention discloses a new and inventive cable structure which comprises: a bore for receiving a blown fibre cable or bundle; one or more carbon nano tube wires for transmitting data signals; and/or one or more carbon nano tube wires for transmitting an electrical power supply.

## Claims

1. A cable for use in a communications network, the cable comprising one or more bores for receiving a further cable and one or more carbon nano tube (CNT) wires.

2. A cable according to claim 1, wherein the cable comprises one or more pairs of CNT wires configured to conduct an electrical signal.

3. A cable according to Claim 2 wherein the electrical signal comprises a data signal.

4. A cable according to Claim 3 wherein the electrical signal comprises a power signal.

5. A cable according to any of Claims 1 to 4 wherein the cable comprises one or more CNT wires configured to act as a reinforcing element.

6. A cable according to any of Claims 1 to 5 wherein the CNT wires comprise an external coating.

7. A cable according to any of Claims 1 to 6 wherein the cable comprises two bores for receiving a further cable
